(19) **Europäisches Patentamt**
**European Patent Office**
**Office européen des brevets**

(11) **EP 1 702 473 B1**

(12) **FASCICULE DE BREVET EUROPEEN**

(45) Date de publication et mention
de la délivrance du brevet:
**22.10.2014 Bulletin 2014/43**

(21) Numéro de dépôt: **05717649.7**

(22) Date de dépôt: **03.01.2005**

(51) Int Cl.:
**H04N 19/61** *(2014.01)*

(86) Numéro de dépôt international:
**PCT/FR2005/050002**

(87) Numéro de publication internationale:
**WO 2005/071972 (04.08.2005 Gazette 2005/31)**

(54) **PROCEDE DE CODAGE D UNE SEQUENCE D IMAGES**

VERFAHREN ZUR CODIERUNG EINER BILDSEQUENZ

METHOD FOR CODING AN IMAGE SEQUENCE

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.01.2004 FR 0450038**

(43) Date de publication de la demande:
**20.09.2006 Bulletin 2006/38**

(73) Titulaire: **Thomson Licensing SA**
**92130 Issy-les-Moulineaux (FR)**

(72) Inventeurs:
• **FRANCOIS, Edouard**
**F-35890 BOURG-DES-COMPTES (FR)**
• **THOREAU, Dominique**
**F-35510 CESSON-SEVIGNE (FR)**
• **LORETTE, Anne**
**35235 Thorigne Fouillard (FR)**

• **OLIVIER, Yannick**
**F-35335 THORIGNE-FOUILLARD (FR)**

(74) Mandataire: **Huchet, Anne et al**
**Technicolor**
**1, rue Jeanne d'Arc**
**92443 Issy-les-Moulineaux Cedex (FR)**

(56) Documents cités:
**EP-A- 1 164 794          WO-A-01/26379
WO-A-03/094527      WO-A-2004/002150
US-A- 5 793 895**

• **PATENT ABSTRACTS OF JAPAN vol. 2000, no. 04, 31 août 2000 (2000-08-31) & JP 2000 032474 A (SHARP CORP), 28 janvier 2000 (2000-01-28)**
• **PATENT ABSTRACTS OF JAPAN vol. 1999, no. 11, 30 septembre 1999 (1999-09-30) & JP 11 155147 A (CASIO COMPUT CO LTD), 8 juin 1999 (1999-06-08)**

**Description**

L'invention concerne un procédé de codage d'une séquence d'images, plus particulièrement exploitant un champ de vecteurs mouvement.

Le domaine est celui de la compression vidéo basée sur des schémas de type hybride, exploitant la prédiction temporelle par compensation de mouvement pour réduire la redondance temporelle des images successives. Les applications concernent, entre autres, le codage des images, la structuration des images successives en GOP, acronyme de l'anglais « Group Of Pictures ».

Dans les standards vidéo existants, tels MPEG-2, MPEG4-4 partie 2, on considère différents types d'images : les images I ou intra qui ne dépendent d'aucune autre image, les images P ou prédictives qui dépendent d'images du passé, les images B, bi-directionnelles, qui dépendent d'images du passé et du futur mais ne peuvent servir d'images de référence. Dans MPEG-4 partie 10, ces principes ont été étendus. Un bloc d'une image P peut être prédit à partir d'une image de référence, cette image de référence pouvant se situer dans le passé ou dans le futur. Un bloc d'une image B peut être prédit à partir de deux images de référence, ces images de référence pouvant se situer toutes deux dans le passé, dans le futur, ou l'une dans le passé et l'autre dans le futur. Les images B sont maintenant appelées Bi-prédictives et peuvent servir d'images de référence.

Un GOP est structuré à partir des différents types d'images. Par exemple, il peut être constitué d'une première image I, d'une image P toutes les 3 images et de deux images B entre deux images I ou P. La plupart du temps, cette structure est figée et prédéterminée. L'écart entre les images P ou/et l'écart entre les images I est fixé. La possibilité de basculer sur le mode I est cependant souvent utilisée pour pouvoir gérer efficacement les changements de plans lors de ruptures de plans dans la séquence (« cuts » en anglais) ou lors de fondus (fading). Cette structure figée, même intégrant des modifications mineures de structure de GOP en fonction des caractéristiques liées aux plans de la séquence vidéo ne permet pas d'avoir une compression optimisée des données vidéo puisqu'elle ne s'adapte pas au contenu local de la vidéo.

Le choix des modes et paramètres de codage d'une entité d'image telle un bloc de pixels ou macrobloc d'image dépend, d'une manière connue, d'un compromis entre le coût de codage de l'image et la qualité de cette image. Le choix, pour cette entité, est effectué sans tenir compte de son comportement à venir. Ainsi, un codage de moindre qualité d'une entité d'image qui pourrait servir de prédiction à une ou plusieurs entités d'images suivantes génère, si tel est le cas, une propagation de cette moindre qualité ou un supplément de coût de codage

Prendre en compte les propriétés instantanées et non moyen à long terme d'une image ou d'une entité d'image à coder peut amener à accorder beaucoup de débit à des parties de l'image ou des images qui serviront peu ou pas pour les images suivantes. Dans un contexte d'applications où le débit total est limité, ceci se fait au détriment des autres images ou entités d'image, qui potentiellement peuvent présenter plus d'intérêt pour les images à coder suivantes, par exemple en servant de prédiction.

Par exemple, le choix des images de référence dans la structure des GOP ne correspond pas forcément aux images dont les entités auront le plus de chance de servir à la prédiction des images suivantes. La qualité de codage n'est donc pas optimisée.

L'invention a pour but de pallier les inconvénients précités. Elle a pour objet un procédé de codage d'une séquence d'images, une image comprenant des entités d'image, comportant une étape de :

-   calcul d'un champ de vecteurs mouvement différé (backward) d'une image k-s et/ou anticipé (forward) d'une image k+p, correspondant à une estimation de mouvement d'entités respectivement de l'image k-s vers une image suivante k et/ou de l'image k+p vers une image précédente k, s et p étant des nombres entiers naturels non nuls,

caractérisé en ce qu'il comporte également les étapes de

-   calcul d'un taux d'utilisation potentielle d'une entité de l'image k pour un codage prédictif différé de l'image k-s, en fonction du nombre de vecteurs du champ de vecteurs mouvement différé de l'image k-s pointant sur l'entité de l'image k ou dans son proche voisinage et/ou
-   calcul d'un taux d'utilisation potentielle d'une entité de l'image k pour un codage prédictif anticipé de l'image k+p, en fonction du nombre de vecteurs du champ de vecteurs mouvement anticipé de l'image k+p pointant sur l'entité de l'image k ou dans son proche voisinage,
-   codage de l'entité d'image ou de l'image comportant l'entité en fonction du taux d'utilisation de l'entité d'image.

Selon une mise en oeuvre particulière, le taux d'utilisation potentielle est également fonction de la répartition spatiale des extrémités des vecteurs mouvement dans l'image k, soit du champ de vecteurs mouvement différé d'une image k-s, soit du champ de vecteurs mouvement anticipé d'une k+p.

Selon une mise en oeuvre particulière, le taux d'utilisation calculé pour chaque entité de l'image k est effectué selon les étapes suivantes :

- pour une zone prédéterminée autour de cette entité, détermination des extrémités des vecteurs mouvement du champ de vecteurs de l'image k-s ou k+p,
- calcul d'un taux d'utilisation pour cette entité (i, j) en fonction du nombre d'extrémités dans la zone et, pour chaque extrémité, de la distance de cette extrémité à l'entité (i, j).

Selon une mise en oeuvre particulière, un procédé itératif est exploité sur un groupe de P images précédant l'image k pour le calcul d'un taux d'utilisation pour un codage prédictif différé ou suivant l'image k pour le calcul d'un taux d'utilisation pour un codage prédictif anticipé, P étant un entier naturel non nul, les champs de vecteurs mouvement étant calculés pour ces images, consistant à calculer le taux d'utilisation d'une entité (i, j) d'une image du groupe en fonction du taux d'utilisation de l'entité de l'image précédente, respectivement suivante, origine du vecteur mouvement dont l'extrémité est affectée à l'entité (i, j) de la dite image du groupe.

Le taux d'utilisation d'une entité d'une image précédente, respectivement suivante, peut être pondéré temporellement pour donner moins d'importance aux images les plus éloignées de l'image calculée k.

Selon une mise en oeuvre particulière, le mode de codage d'une entité de l'image tel que mode inter, mode intra, est sélectionné en fonction de son taux d'utilisation.

Selon une mise en oeuvre particulière, un paramètre de codage d'une entité de l'image tel que pas de quantification, taille d'un bloc d'image, critère débit-distorsion, nombre de coefficients AC codés, matrice de pondération, est calculé en fonction de son taux d'utilisation.

Selon une mise en oeuvre particulière, une entité d'image étant un bloc d'image, l'estimation de mouvement d'entités est réalisé en une étape d'échantillonnage de l'image de manière à ce qu'un pixel de l'image échantillonnée corresponde à une entité d'image, puis en une estimation de mouvement au niveau du pixel, sur l'image échantillonnée.

Selon une mise en oeuvre particulière, une entité d'image est un pixel et le codage de l'image est fonction de la valeur moyenne des taux affectés aux pixels de l'image.

Selon une mise en oeuvre particulière, un calcul d'un taux d'utilisation d'une image de la séquence est effectué en fonction des taux d'utilisation attribués aux entités de la dite image et une sélection d'une image de référence dans la séquence d'images vidéo pour un codage prédictif anticipé d'une image précédente ou un codage prédictif différé d'une image suivante, à partir de cette image de référence, est effectuée en fonction des taux d'utilisation potentielle calculés pour les images de la séquence.

L'invention concerne également un procédé de structuration d'un GOP mettant en oeuvre le procédé précédent pour le calcul de taux d'utilisation des images de la séquence, caractérisé en ce qu'il comporte les étapes suivantes :

- définition de 3 classes d'images selon que le taux d'utilisation future est sensiblement supérieur, du même ordre ou sensiblement inférieur au taux d'utilisation passée,
- classification des images du GOP,
- détermination de plages d'images constituées d'un nombre minimum prédéfini d'images successives de même classe,
- classification des plages en fonction de ces classes d'images,
- structuration du GOP en imposant des images de référence de type P aux extrémités des plages déterminées.

Selon une mise en oeuvre particulière, des images de référence supplémentaires de type P sont placées à l'intérieur des plages encadrées par des images de référence de type P lorsque ces plages ont une longueur supérieure à une valeur prédéfinie. Le mode de codage des images peut être fonction de la plage à laquelle elles appartiennent.

L'analyse du comportement dynamique des différentes entités de l'image, c'est à dire l'analyse du mouvement sur plusieurs images successives permet d'évaluer, pour chaque entité d'image ou pour chaque image, le degré d'utilisation potentiel en tant que prédiction.

A débit régulé, la qualité de restitution des images est accrue, à débit non régulé, c'est à dire avec une valeur du pas de quantification des coefficients DCT fixe, le coût de codage est moindre.

Une amélioration des performances de codage, notamment en ce qui concerne le rendu psycho-visuel, est obtenue. La compression vidéo est optimisée en limitant le coût de codage des parties de l'image qui sont amenées à disparaître plus ou moins rapidement et en améliorant la qualité de codage des autres entités de l'image dont la durée de vie est plus importante. Ainsi, la prédiction temporelle des images à coder suivantes, qui utiliseront ces entités comme référence, sera elle-même de qualité supérieure.

La compression vidéo est optimisée en déterminant de façon adaptative la structure d'un GOP en fonction du contenu de la séquence vidéo, en choisissant judicieusement les images de référence pour assurer une bonne prédiction des autres images. L'amélioration de la qualité des images est particulièrement visible dans des scènes contenant des effets tels que le zoom avant et arrière. Dans le cas du zoom arrière, le choix d'une image suivante comme image de référence est privilégié, dans le cas de zoom avant, c'est une image précédente qui est privilégiée dans le choix de l'image de référence.

D'autres particularités et avantages de l'invention apparaîtront .clairement dans la description suivante donnée à titre d'exemple non limitatif, et faite en regard des figures annexées qui représentent :

- la figure 1, un schéma simplifié du procédé de calcul des cartes d'utilisation,
- la figure 2, un champ de mouvement « backward » et « forward »,
- la figure 3, les champs utilisés pour les cartes UP et UF,
- la figure 4, un organigramme pour le calcul de $UF_N$ et $UP_N$,
- la figure 5, un organigramme pour le calcul d'une carte temporaire U,
- la figure 6, une illustration de $UF_N$ en cas de zoom avant,
- la figure 7, une illustration de $UF_N$ en cas de zoom arrière,
- la figure 8, une illustration de $UF_N$ en cas de translation,
- la figure 9, un schéma simplifié du procédé de codage d'une image,
- la figure 10, un schéma simplifié du procédé de sélection d'une image de référence,
- la figure 11, un organigramme pour la classification des plages de GOP,
- la figure 12, un algorithme de segmentation du GOP en plages,
- la figure 13, les courbes d'évolution de $\overline{UP_N}$ et $\overline{UF_N}$ pour un zoom avant,
- la figure 14, les courbes d'évolution de $\overline{UP_N}$ et $\overline{UF_N}$ pour un zoom arrière,
- la figure 15, les courbes d'évolution de $\overline{UP_N}$ et $\overline{UF_N}$ pour une séquence « stephan »,
- la figure 16, les courbes débit-distorsion sur un extrait de la séquence « stephan »,
- la figure 17, un exemple de répartition des images de référence.

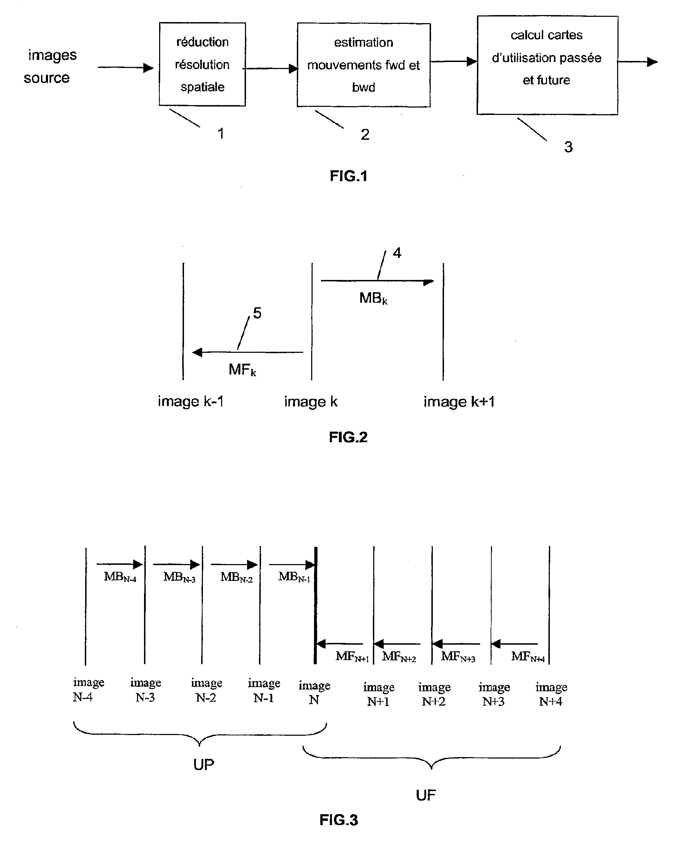

La figure 1 présente une structure simplifiée du procédé de calcul de cartes d'utilisation.

Les images sources d'une séquence vidéo sont transmises à une première étape de réduction de la résolution spatiale, référencée 1 sur la figure. Cette étape est suivie d'une étape 2 d'estimation de mouvement anticipé et différé que l'on appellera aussi par la suite mouvement « forward » et « backward » pour reprendre les termes anglais de la norme MPEG plus couramment utilisés. L'étape suivante 3 réalise un calcul de cartes d'utilisation passée et future.

La réduction de la résolution spatiale permet de réduire la taille des images successives sur lesquelles l'analyse est menée afin de diminuer les coûts de calcul. Si on se place dans un contexte MPEG-4 partie 10, la taille minimale des blocs est de 4x4 pixels. Il semble donc pertinent de faire une réduction de résolution d'un facteur 4 en hauteur et en largeur, un pixel de l'image réduite correspondant alors à un bloc de l'image en pleine résolution.

L'étape 2 réalise, pour chaque image réduite $I_k$, une estimation d'un champ de mouvement dense forward $MF_k$, de $I_k$ vers son image précédente $I_{k-1}$, et d'un champ de mouvement backward $MB_k$ de $I_k$ vers son image suivante $I_{k+1}$. Les champs de vecteurs $MF_k$ et $MB_k$ sont les champs de vecteurs associés à une image $I_k$. Un vecteur mouvement d'un de ces champs associés à l'image $I_k$ a son origine correspondant à un pixel de cette image $I_k$, pixel auquel il est affecté.

La figure 2 représente de manière schématique les champs de mouvement backward $MB_k$ référencés 4 et forward $MF_k$ référencés 5 d'une image k. L'estimation de mouvement peut être effectuée par tout type d'estimateur, un estimateur de type pel-récursif est tout à fait adapté.

L'étape 3 calcule des cartes d'utilisation potentielles. Pour chaque image réduite N, l'évaluation de cartes $UF_N$ et $UP_N$ caractérisant son utilisation potentielle passée et future à partir des champs de mouvements successifs forward et backward est effectuée. Ce calcul se fait à partir des 2P champs de vecteurs calculés pour les images réduites N-P à N+P. Un délai d'au moins P images est donc nécessaire pour cette opération.

Par exemple dans le cas P=1, pour une image N=k-1, le champ de vecteurs forward $MF_k$ associé à l'image k permet, en fonction des positions des extrémités des vecteurs mouvement dans l'image k-1, dont l'origine est un pixel de l'image k, de définir une probabilité d'utilisation des pixels de l'image k-1. Il s'agit de la probabilité d'utilisation des pixels de l'image k-1, en général leur valeur de luminance, par les vecteurs mouvement, pour définir l'image k par estimation de mouvement anticipée ou forward. De même, pour une image N=k+1, le champ de vecteurs backward $MB_k$, associé à l'image k, permet de définir une probabilité d'utilisation des pixels de l'image k+1 pour définir l'image k par estimation de mouvement différée ou backward.

Une analyse est donc effectuée dans le but d'évaluer le degré potentiel d'utilisation de chaque entité ou de chaque image comme prédiction ou référence temporelle, à partir des champs de mouvement préalablement calculés. Pour une image N, on calcule deux cartes ou images, $UF_N$ indiquant pour chaque bloc 4x4 de l'image N son niveau potentiel d'usage pour les images futures, et $UP_N$ indiquant pour chaque bloc 4x4 de l'image N son niveau potentiel d'usage pour les images passées. En chaque pixel (i, j) de l'image $UF_N$, la valeur $UF_N(i, j)$ indique l'usage potentiel de ce pixel pour les images futures. De même, en chaque pixel (i, j) de l'image $UP_N$, la valeur $UP_N(i, j)$ indique l'usage potentiel de ce pixel pour les images passées.

En prenant comme exemple le codage de blocs de l'image k, le calcul du taux d'utilisation potentielle d'un bloc de cette image k exploite soit le champ de vecteurs mouvement différé (backward) d'une image k-s correspondant à une estimation de mouvement des blocs de l'image k-s vers une image suivante k, soit le calcul d'un champ de vecteurs mouvement anticipé (forward) d'une image k+p, correspondant à une estimation de mouvement des blocs de l'image k+p vers une image précédente k. s et p sont des nombres entiers naturels non nuls, Il peut également exploiter les deux champs de vecteurs.

Ce taux est calculé pour un codage prédictif différé de l'image k, en fonction du nombre de vecteurs du champ de vecteurs mouvement différé de l'image k-s pointant vers le bloc de l'image k ou pour un codage prédictif anticipé de l'image k+p, en fonction du nombre de vecteurs du champ de vecteurs mouvement anticipé de l'image k+p pointant vers le bloc de l'image k. Il peut être également calculé pour un codage prédictif différé et anticipé, étant alors une combinaison des deux taux précédents. Le codage du bloc d'image ou de l'image comportant ce bloc est fonction du taux d'utilisation calculé.

Calcul de la carte UF$_N$ et de la carte UP$_N$

Le calcul de la carte UF$_N$ caractérisant l'utilisation potentielle future relative à l'image N se base sur les champs de mouvement forward MF$_{N+1}$, MF$_{N+2}$, ..., MF$_{N+P}$. La figure 3 représente les champs utilisés pour les cartes UP et UF dans le cas P=4.

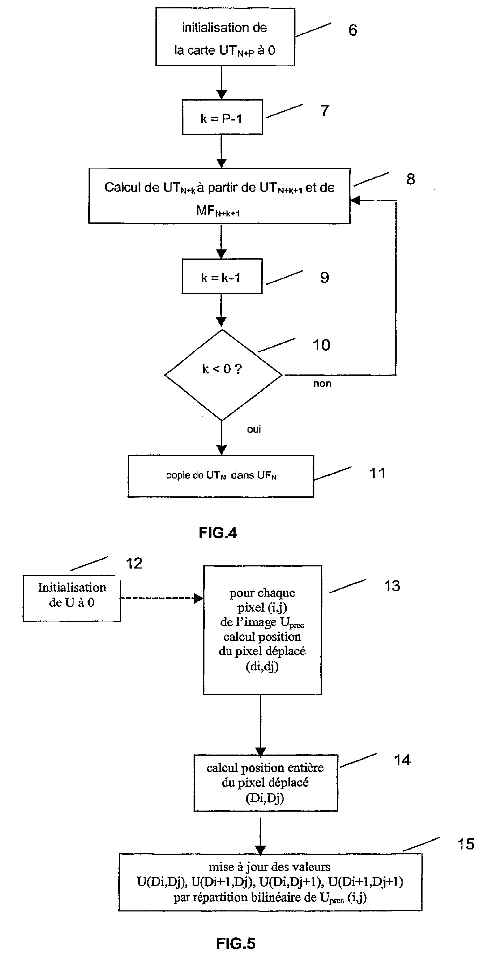

L'organigramme de calcul de la carte UF$_N$ est décrit à la figure 4.

Le processus est récursif. La première étape référencée 6 initialise une carte temporaire UT$_{N+P}$ par une image dont la valeur attribuée à chaque pixel est 0. La seconde étape 7 initialise une variable k à la valeur P-1. L'étape 8 calcule une carte temporaire UT$_{N+k}$ à partir de UT$_{N+k+1}$ et MF$_{N+k+1}$. L'étape suivante 9 décrémente la valeur k et l'étape 10 vérifie si k est négatif. Dans la négative, l'étape suivante est l'étape 8 et ainsi de suite jusqu'au calcul de UT$_N$ à partir de UT$_{N+1}$ et MF$_{N+1}$. En effet lorsque k est trouvé négatif à l'étape 10, l'étape suivante est l'étape 11 qui récupère la carte UT$_N$. Cette carte UT$_N$ correspond alors à la carte finale que l'on veut calculer UF$_N$.

Le calcul de la carte UP$_N$ caractérisant l'utilisation potentielle passée de l'image N se base sur les champs de mouvement backward MB$_{N-1}$, MB$_{N-2}$, ..., MB$_{N-P}$. Le processus est similaire à celui décrit pour la carte UF$_N$. Une carte temporaire UT$_{N-P}$ est initialisée par une image dont la valeur est 0 en chaque pixel. Puis une carte temporaire UT$_{N-P+1}$ est déduite à partir de UT$_{N-P}$ et MB$_{N-P}$, puis une carte UT$_{N-P+2}$ à partir de UT$_{N-P-1}$ et MB$_{N-P+1}$ et ainsi de suite jusqu'à la carte UT$_N$ à partir de UT$_{N-1}$ et MB$_{N-1}$. La carte UT$_N$ correspond alors à la carte finale que l'on veut calculer UP$_N$.

L'étape 8 est décrite plus précisément à la figure 5. Celle-ci représente un organigramme de calcul d'une carte U à partir d'une carte précédemment calculée U$_{prec}$ et d'un champ de mouvement M. Il s'agit du calcul d'une carte temporaire UT$_{N+K}$ à partir d'une carte temporaire précédemment calculée UT$_{N+k+1}$ et d'un champ de mouvement MF$_{N+k+1}$ dans le cas d'une carte UF$_N$ et du calcul d'une carte temporaire UT$_{N-k}$ à partir d'une carte temporaire précédemment calculée UT$_{N-k-1}$ et d'un champ de mouvement MB$_{N-k-1}$ dans le cas d'une carte UP$_N$

L'étape référencée 12 rappelle que la valeur de chacun des points de l'image ou carte U est initialisée à 0, pour la première image temporaire UT$_{N+P}$ ou UT$_{N-P}$, selon que l'on calcule UF$_N$ ou UP$_N$, étape 6 de l'algorithme précédent. L'étape 13 détermine, pour chaque pixel (i, j) de l'image U$_{prec}$, qui est soit la carte initialisée à 0 lors de la première itération, soit la carte calculée à l'itération précédente, sa position (di, dj) après compensation de mouvement par son vecteur mouvement M(i, j) de composantes mi(i, j) et mj(i, j). i et j sont les numéros de lignes et colonnes dans l'image.

$$\begin{cases} di = i + mi(i, j) \\ dj = j + mj(i, j) \end{cases}$$

L'étape suivante 14 calcule la position entière du pixel déplacé. Si (di, dj) est dans l'image, on considère le pixel de coordonnées (Di, Dj) où Di est la partie entière de di et Dj la partie entière de dj ainsi que les valeurs résiduelles ri = di-Di, rj = dj-Dj.

L'étape suivante 15 effectue une mise à jour des valeurs ou taux d'utilisation pour les pixels (Di, Dj), (Di ,Dj+1), (Di+1, Dj), (Di+1, Dj+1) de la carte courante, en fonction de la valeur d'utilisation U$_{prec}$(i, j) attribuée au pixel (i, j) de la carte précédente U$_{prec}$ et de la position de ce pixel dans la carte courante après déplacement correspondant au vecteur mouvement affecté à ce pixel (i, j).

A partir d'une pondération de type bi-linéaire basée sur les valeurs résiduelles du vecteur mouvement, la valeur U est mise à jour selon les règles suivantes :

$$U(Di, Dj) = U(Di, Dj) + (1-ri).(1-rj).(\alpha . U_{prec}(i, j) + 1)$$

$$U(Di\ \ , Dj+1) = U(Di\ \ , Dj+1) + (1-ri).(rj)\ \ .\ (\ \alpha\ .\ U_{prec}(i, j) + 1\ )$$

$$U(Di+1, Dj\ \ ) = U(Di+1, Dj\ \ ) + \ \ (ri).(1-rj)\ .\ (\ \alpha\ .\ U_{prec}(i, j) + 1\ )$$

$$U(Di+1, Dj+1) = U(Di+1, Dj+1) + \ \ (ri).(rj)\ \ .\ (\ \alpha\ .\ U_{prec}(i, j) + 1\ )$$

avec $0 < \alpha \le 1$.

Ainsi, pour un vecteur mouvement pointant en une position de coordonnées di, dj, les quatre pixels de coordonnées (Di, Dj), (Di ,Dj+1), (Di+1, Dj), (Di+1, Dj+1) entourant cette position, sont traités. La plus forte valeur est attribuée au pixel D le plus proche de l'endroit pointé par le vecteur mouvement. Si, par exemple, le vecteur pointe sur (Di, Dj), ri et rj sont nuls et seule la valeur U(Di, Dj) est augmentée.

Le paramètre $\alpha$ permet de réduire progressivement l'influence des cartes d'utilisation les plus anciennes dans le processus itératif de calcul de la carte d'utilisation décrit dans les organigrammes des figures 4 et 5. Il peut être calculé à partir d'une mesure de confiance en l'estimation du champ de vecteurs mouvement, ce taux de confiance peut être par exemple calculé par l'estimateur de mouvement.

Il s'agit bien sûr ici d'exemples de calcul, les pondérations spatiales et temporelles pouvant être effectuées de différentes manières.

A titre d'exemple, reprenons le calcul de la carte $UF_N$. En appliquant ces formules, la contribution de $UT_{N+1}$ à la carte $UT_N$ est pondérée d'un facteur $\alpha$, celle de $UT_{N+2}$ d'un facteur $\alpha^2$, celle de $UT_{N+3}$ d'un facteur $\alpha^3$, ... celle de $UT_{N+P}$ d'un facteur $\alpha^P$.

Une amélioration de l'invention consiste à pondérer les valeurs de taux d'utilisation calculées en fonction de la complexité des blocs d'image. Lors du calcul des valeurs $UP_N$ et $UF_N$ associées à une image N donnée, il est en effet intéressant de prendre en compte la complexité des blocs de cette image. Considérons deux blocs de l'image dont l'un présente une texture très riche et le second une texture homogène. Supposons par ailleurs que ces deux blocs de l'image présentent des valeurs d'utilisation identiques. En terme de codage, c'est le bloc de texture très riche qui est réellement important pour la prédiction temporelle. Ainsi, pour un calcul des taux d'utilisation au niveau de l'image, il semble pertinent de déterminer $\overline{UP_N}$ et $\overline{UF_N}$ comme des moyennes pondérées par la complexité des blocs des cartes $UP_N$ et $UF_N$. Par exemple on peut prendre en compte la variance de la texture des blocs pour faire une moyenne pondérée :

$$\overline{UP_N} = \sum_{b \in I} UP_N(b) * \sigma^2(b)$$

$$\overline{UF_N} = \sum_{b \in I} UF_N(b) * \sigma^2(b)$$

où *b* désigne un bloc de l'image *I*.

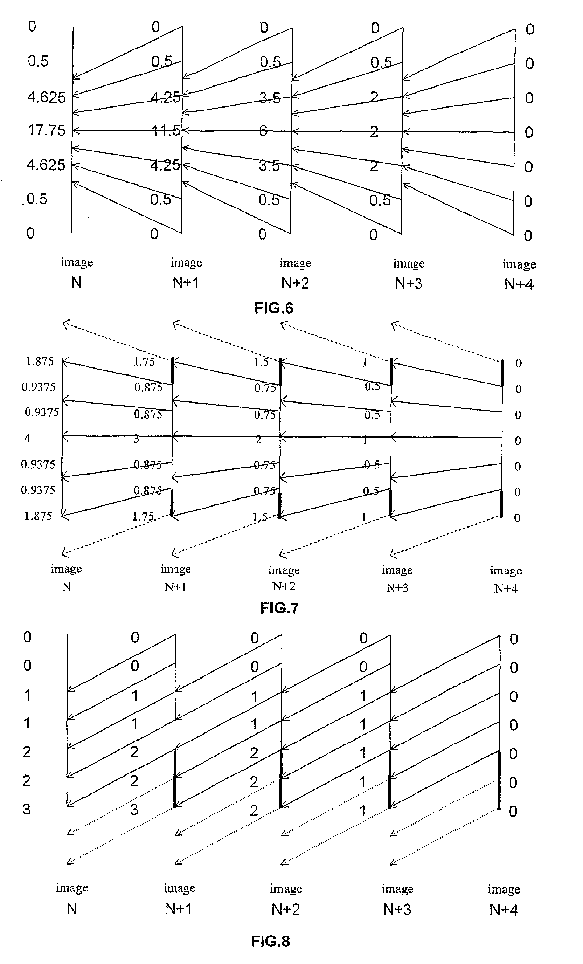

Les figures 6 à 8 illustrent le processus de calcul de la carte UF dans des configurations de mouvement différentes, la figure 6 lors d'un zoom avant, la figure 7 lors d'un zoom arrière et la figure 8 lors d'une translation, dans le cas mono-dimensionnel avec $\alpha$=1 et P=4.

Les zones d'images en traits épais représentées figures 7 et 8 correspondent à des parties de l'image difficilement prédictibles puisqu'elles se situent en dehors de l'image de référence N. Ces zones sont dotées de vecteurs en pointillé, qui pointent à l'extérieur de l'image, calculés à partir d'un estimateur de mouvement qui permet de modéliser le champ de mouvement en champ de mouvement global (zoom, translation ...).

Pour donner un exemple de calcul, considérons l'image N+2 de la figure 6. La valeur 3,5 attribuée à un pixel de l'image est obtenue de la manière suivante. Un vecteur mouvement provenant d'un pixel affecté de la valeur 0,5 de l'image N+3 donne une valeur (1+0,5) =1,5. Un vecteur mouvement provenant d'un pixel affecté de la valeur 0 de l'image N+ 3 donne la valeur (1+0).0,5. La valeur 0,5 provient du fait que le vecteur mouvement ne pointe pas sur le pixel de l'image N+2 mais entre deux pixels de cette image. De même, un vecteur mouvement provenant d'un pixel affecté de la valeur 2 de l'image N+3 donne la valeur (1+2).0,5. Soit un total de 1,5 + 0,5 + 1,5 = 3,5.

Dans l'exemple de la figure 7, cas d'un zoom arrière, la partie extérieure ne peut pas être prédite en prédiction forward car celle-ci contient systématiquement de l'information nouvelle, alors que dans le même temps la partie centrale de l'image réduit sa définition. Si on considère la même séquence en prédiction backward, alors chacune des images prise en sens inverse permet de prédire intégralement l'image suivante, toujours dans le sens inverse. C'est également le cas en zoom avant avec la prédiction forward, exemple de la figure 6.

En fait, toute zone nouvelle à coder fait généralement appel au codage intra, lequel est toujours d'un coût élevé. Dans le cas présent de zoom arrière, le simple fait de coder, en images P cette séquence dans le sens inverse, avec implicitement la prédiction backward permet de réduire le coût de codage comparativement au codage dans le sens initial.

Une simulation en codage MPEG-4 partie 2 en images P avec M=3 permet d'illustrer ce phénomène sur un zoom arrière. Ces résultats concernent essentiellement les images de type P:

|  | débi | Psnr |
|---|---|---|
| Codage ordre normal | 506.8 Kb/s | 33.29 dB |
| Codage ordre inverse | 447.8 Kb/s | 33.17 dB |
| Gain | -11.6 % | -0.12 dB |

Le cas de deux objets initialement hors de l'image, puis apparaissant chacun sur un côté de l'image, se croisant et enfin ressortant de l'autre côté, est aussi un cas d'école. Dans ce cas, les images les plus pertinentes, c'est à dire les images qui ont le plus de chance de servir de référence temporelle, sont celles pour lesquelles les deux objets sont le plus visible.

On constate donc qu'il est judicieux de choisir les images de référence et le type de prédiction forward ou backward. Les outils offerts par la norme MPEG4 partie 10 permettent ce choix. Il est également judicieux, lors du codage d'une image, de privilégier les entités d'image utilisées pour la prédiction des entités d'une image suivante ou précédente à coder.

Dans les exemples, le taux d'utilisation potentielle est calculé pour chaque bloc ou macrobloc de l'image. Il est bien sûr tout aussi envisageable, sans sortir du domaine de l'invention, de calculer des cartes d'utilisation pour toute entité de l'image, par exemple un pixel de l'image, un objet de l'image ou VOP, acronyme de l'anglais Video Object Plane constitué d'un groupe de pixels.

De même, les calculs sont décrits pour une image complète. Les entités relatives à l'image sont des blocs d'image de taille 4x4 et les champs de vecteurs mouvement calculés, par mesure de simplification, sont ceux relatifs à ces entités. Il pourrait tout aussi bien s'agir des pixels de l'image d'origine ou des ensembles de pixels constituant des objets de l'image dans le cas de codage objets, et les champs de vecteurs mouvement calculés pourraient être les champs denses de cette image ou ceux relatifs aux objets. En fait, les entités relatives aux vecteurs des champs de vecteurs mouvement exploités pour le calcul des cartes d'utilisation peuvent être différentes des entités sur lesquelles est effectué le codage. Il est à la portée de l'homme du métier d'affecter un vecteur mouvement ou un taux d'utilisation à une portion d'image sur laquelle est effectué le codage à partir d'un champ de vecteurs mouvement de l'image, par exemple par moyennage ou par interpolation.

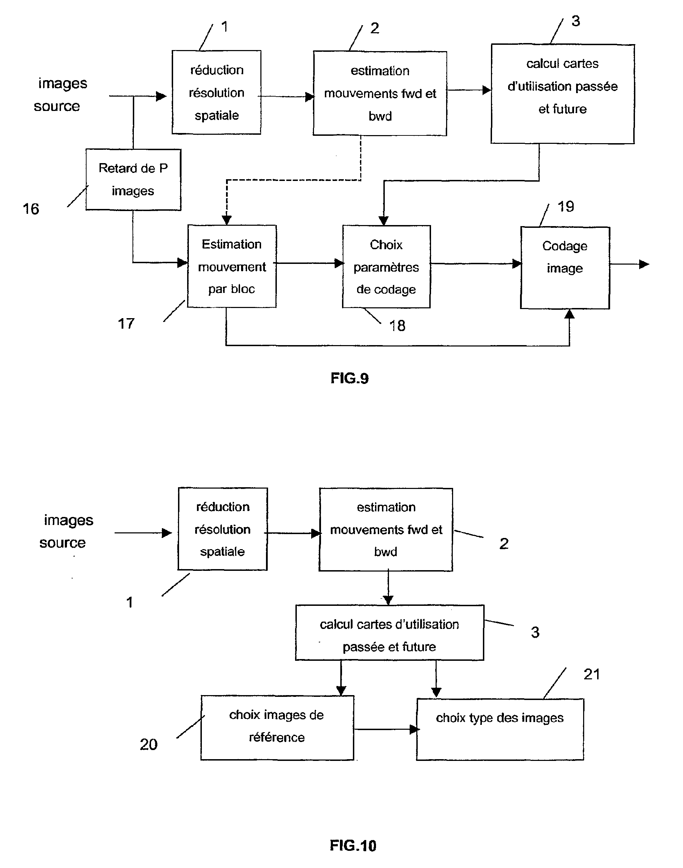

Une première application du calcul de cartes d'utilisation concerne le codage à proprement parler des images, à savoir le calcul de paramètres de codage et la sélection de modes de codage. La figure 9 complète le procédé de la figure 1 pour le calcul de paramètres de codage et sélection de modes de codage. Les références de la figure 1 sont reprises pour les éléments communs. Les entités codées sont, dans l'exemple, des blocs d'images.

Une analyse du mouvement est effectuée sur plusieurs images successives, il s'agit des étapes 1, 2 et 3, avec une avance de P images sur le codage proprement dit des images. Cette analyse permet de caractériser le devenir des entités de l'image courante à coder.

Une étape 16 retarde les images sources, celles transmises aux étapes 1, 2 et 3, de P images avant de les transmettre aux étapes 17, 18, 19 pour leur codage. Le codage de l'image consiste en une estimation de mouvement par bloc, étape 17, à partir des images sources retardées, prenant éventuellement en compte les informations de mouvement provenant de l'étape 2. Le calcul des critères de choix du mode de codage et/ou le calcul des paramètres de codage associés, étape 18, est effectué en fonction des informations provenant de l'étape de calcul des cartes d'utilisation 3 et de l'étape d'estimation de mouvement par bloc 17. Le résultat de ce calcul est transmis à l'étape 19 de codage de l'image, qui reçoit également les informations d'estimation de mouvement de l'étape 17.

Les cartes d'utilisation permettent d'avoir, pour chaque bloc, son niveau d'utilisation potentiel pour le futur et/ou pour le passé.

Le mode de codage sélectionné et les paramètres de codage exploités dépendent du type d'image à coder.

S'il s'agit d'une image de type prédictif ou type P, la carte d'utilisation exploitée est la carte d'utilisation pour le futur. S'il s'agit d'une image de type bidirectionnel ou type B, servant de référence pour le codage d'autres images, ce qu'autorise la norme MPEG-4 partie 10, la carte d'utilisation exploitée est par exemple la moyenne des cartes d'utilisation pour le futur et pour le passé. Le principe est d'assurer une qualité de codage plus importante pour les blocs dont le taux d'utilisation potentielle est élevé.

Le mode de codage est par exemple le type de codage, inter ou intra, la taille des blocs dans le macrobloc sur lesquels est effectué le codage et auxquels sont attribués les vecteurs mouvement, les paramètres sont par exemple la direction de prédiction en mode inter dans l'intra, l'image de référence choisie, le pas de quantification, la matrice de pondération, etc. Ces différents modes et paramètres de codage sont décrits dans les normes, entre autres la norme MPEG 2, MPEG4 partie 2, MPEG4 partie 10, H263, par exemple le paragraphe 9.2.1.5 du document ISO/IEC 14496-10 :2002 pour la norme MPEG4 partie 10.

A titre d'exemple, différents modes de codage possibles décrits dans la norme MPEG 4 sont listés ci-après pour une image de type P :

| Modes | Paramètres |
|---|---|
| Intra16x16 | direction de prédiction Intra (codage inter dans l'intra) |
| Intra4x4 | direction de prédiction Intra (codage inter dans l'intra) |
| Inter16x16 | 1 vecteur mvt + son numéro d'image de référence (optionnel) |
| Inter16x8 | 2 vecteurs mvt + leur numéro d'image de référence (optionnel) |
| Inter8x16 | 2 vecteurs mvt + leur numéro d'image de référence (optionnel) |
| Inter8x8 | 4 à 16 vecteurs mvt + leur numéro d'image de référence (optionnel) (voir tableau ci-dessous) |
| Skip | |

Les valeurs après les termes intra ou inter correspondent à la taille des blocs constituant le macrobloc, le numéro de l'image de référence indique l'image à laquelle se réfère le vecteur mouvement.

Pour le mode Inter8x8, le macrobloc est découpé en 4 blocs 8x8 et chacun de ces blocs 8x8 peut être codé selon les modes suivants, ce qui donne 16 vecteurs mouvement au maximum pour le macrobloc :

| Inter8x8 | 1 vecteur mvt + son numéro d'image de référence (optionnel) |
|---|---|
| Inter8x4 | 2 vecteurs mvt + leur numéro d'image de référence (optionnel) |
| Inter4x8 | 2 vecteurs mvt + leur numéro d'image de référence (optionnel) |
| Inter4x4 | 4 vecteurs mvt + leur numéro d'image de référence (optionnel) |

Le bloc 17 réalise une estimation de mouvement de type classique, par exemple appariement par bloc ou « block matching » en anglais, afin d'exploiter la redondance temporelle des images lors du codage. Elle fournit des vecteurs de mouvement, par blocs ou macroblocs, relatifs aux images de référence sur lesquelles la corrélation est effectuée. Ces vecteurs mouvement sont transmis à l'étape 19 pour leur codage avant leur transmission, avec les autres données numériques vidéo, à un décodeur ou un dispositif de mémorisation. Ils sont également transmis à l'étape 18 qui calcule les paramètres de codage et les critères de choix de mode. Ces informations de codage sont transmises à l'étape 19 qui effectue le codage proprement dit de l'image et qui fournit les données vidéo numériques codées. Ce codage est par exemple un codage de type MPEG exploitant la corrélation temporelle et spatiale, avec calcul de la transformée cosinus discrète appliquée aux blocs de l'image ou bien aux blocs de résidus obtenus par différence du bloc courant avec un bloc reconstruit d'une image de référence.

La carte UN calculée à l'étape 3 est donc exploitée pour le choix du mode de codage et le calcul des paramètres de codage, étape 18. Des exemples sont donnés ci-après.

Un paramètre de codage important est le pas de quantification d'un bloc de l'image. La qualité d'une image est d'autant meilleure que le pas de quantification est faible. Ce pas de quantification est habituellement calculé par un module de régulation pour l'image complète, ce pas étant ensuite affiné pour chaque macrobloc en fonction de certains critères par exemple liés à la perception de défauts d'images par le spectateur, tels que le mouvement. Un nouveau critère est proposé, qui peut être prioritaire, pour la pondération de la valeur du pas de quantification appliqué à un macrobloc. Cette pondération se fait en fonction des valeurs $U_N(i,j)$ des blocs 4x4 de ce macrobloc. La valeur du pas de quantification est ainsi réduite pour des coefficients d'utilisation élevés et inversement. Les valeurs de la carte de pondération pour l'image, paramètres de codage calculés à l'étape 18, sont transmises à l'étape 19 qui les exploite pour le calcul des pas de quantification des blocs.

Un autre exemple consiste à modifier le pas de quantification calculé pour l'image complète. La valeur moyenne $\overline{U_N}$ de la carte UN est alors calculée lors de l'étape 18. Ce paramètre de codage qui est la valeur de pondération, pour l'image, du pas de quantification, est exploité par le module de régulation du débit lors du codage de l'image. Ce dernier fournit un pas de quantification dépendant de cette valeur moyenne. Il est en effet préférable d'accorder une bonne qualité aux images importantes, c'est à dire servant de référence de façon prolongée. Par conséquent il est accordé plus de débit aux images N présentant des valeurs $\overline{U_N}$ élevées.

Un autre exemple consiste en la modification d'un critère débit-distorsion pour la sélection du mode de codage. La sélection d'un mode de codage d'un macrobloc, selon l'art connu, peut être effectuée en fonction de la distorsion D et du coût de codage C du macrobloc. Le principe est de minimiser ce critère, mais en donnant plus d'importance au paramètre distorsion qu'au paramètre coût, lors du choix du mode, lorsque le taux d'utilisation est plus important, de manière à favoriser le mode de codage donnant une faible distorsion. Par exemple, le critère distorsion-débit suivant peut être utilisé :

$$E_{mb}(\text{mode}) = f_{mb}(U_N(b)).D(\text{mode}, param(\text{mode})) + \lambda.C(\text{mode}, param(\text{mode}))$$

- mb désigne le macrobloc traité,
- D représente la fonction mesurant la distorsion. C'est par exemple la somme de la valeur absolu de la différence entre le signal reconstruit et le signal source,
- C représente la fonction de coût des données codées,
- $U_N(b)$ est le taux d'utilisation affecté à un bloc b du macrobloc mb,
- param(mode) désigne les paramètres associés au mode testé, par exemple les vecteurs de mouvement de chaque bloc 8x8 si le mode correspond à un codage inter avec un vecteur par bloc8x8.
- mode désigne le mode testé.
- $f_{mb}()$ est une fonction de pondération de la distorsion qui peut prendre par exemple la forme suivante :

$$f_{mb}(U_N(b)) = \begin{cases} 1 & \text{si } \exists b \subset mb, \; U_N(b) > S, \\ \mu + \dfrac{1-\mu}{S}.\max_{b \subset mb}(U_N(b)) & \end{cases}$$

sinon

$\mu$ étant un paramètre prédéterminé compris entre 0 et 1 et b désignant un bloc du macrobloc mb testé et S un seuil prédéterminé.

La fonction f varie donc de la valeur $\mu$ si UN est égal à zéro pour l'ensemble des blocs du macrobloc jusqu'à la valeur 1 si UN est supérieur ou égal à S pour au moins un des blocs du macrobloc.

Ainsi, pour un macrobloc dont les blocs ont tous un faible taux d'utilisation UN, la fonction de pondération f a une faible valeur. La fonction coût devient alors essentielle et le choix est orienté vers le mode de codage présentant le coût le plus faible. Au contraire, si tous les blocs ont un fort taux d'utilisation $U_N$, la fonction de pondération f est proche de l'unité et on retrouve la formule classique de choix débit-distorsion utilisée par exemple dans le logiciel de référence MPEG-4 partie 10.

Un quatrième exemple de calcul de paramètres de codage est le forçage progressif à 0 des coefficients AC des blocs pour lesquels $U_N(i, j)$ est inférieur à un seuil prédéterminé. Les coefficients AC sont forcés à zéro de manière progressive, c'est à dire en partant des coefficients relatifs aux plus hautes fréquences, par exemple en sens inverse du sens de balayage en zig-zag, et le nombre concerné est fonction de la valeur du taux d'utilisation. L'étape 18 calcule une matrice de valeurs binaires, les coefficients AC étant multipliés par les coefficients de cette matrice, dont le nombre de zéro, en partant de l'emplacement correspondant aux coefficients AC de plus haute fréquence, est fonction du taux d'utilisation du bloc.

Il est également possible de calculer des matrices de pondération des coefficients de blocs en fonction du taux d'utilisation. Ces matrices peuvent elle-mêmes pondérer les coefficients des matrices de pondération définies dans les normes MPEG et qui, elles, tiennent compte de la fréquence des coefficients et du type de codage des blocs.

L'analyse permettant d'obtenir les cartes d'utilisation peut donc être menée dans le sens temporel direct et dans le sens temporel inverse, c'est à dire vers le passé. Ceci est pertinent dans le cas de MPEG-4 partie 10 où les images servant de références peuvent être organisées dans n'importe quel ordre temporel.

La procédure pour traiter une image est alors la suivante :

Au moment de coder l'image N, on dispose des champs de mouvement $M_{N+P-1}$, ..., $M_{N+1}$, $M_N$. Le codage de l'image N implique les étapes suivantes :

- réduction de l'image N+P et estimation du mouvement dense $M_{N+P}$ entre les images réduites N+P et N+P-1 ;
- calcul de la carte UN à partir des champs de mouvement $M_{N+P}$, $M_{N+P-1}$, ..., $M_{N+1}$;
- codage de l'image N en utilisant en entrée $M_N$ et UN.

Pour l'image 0, il est nécessaire au préalable de procéder à l'estimation des champs de mouvement $M_{P-1}$, ..., $M_1$.

Une deuxième application de ce calcul de cartes d'utilisation concerne la sélection d'images de référence d'une séquence d'images vidéo pour un codage prédictif anticipé d'une image précédente ou un codage prédictif différé d'une image suivante, à partir de cette image de référence. Il peut s'agir plus particulièrement d'un procédé de structuration adaptative de GOP ou groupe d'images.

La figure 10 complète le procédé de la figure 1 pour la sélection d'images de référence. Les références de la figure 1 sont reprises pour les éléments communs. Les cartes d'utilisation calculées à l'étape 3 sont transmises à une étape 20 qui effectue un choix des images de référence et à une étape 21 qui reçoit en parallèle les informations de l'étape 20, pour effectuer un choix du type des images.

La segmentation de la vidéo en plans est supposée réalisée lors d'une phase préalable. L'analyse de la séquence vidéo se fait alors au niveau du plan vidéo.

Pour chaque image réduite N est déterminé, étape 20, son classement en image de référence ou en image non utilisée à partir des cartes $UF_N$ et $UP_N$. Les images de référence sont prioritairement choisies lorsque leurs cartes présentent une différence sensible avec les cartes des images précédentes et/ou futures. Il s'agit par exemple des images encadrant un groupe d'images ayant des cartes voisines. Les types des images d'un GOP, étape 21, sont définis en fonction du choix de ces images de référence et des cartes d'utilisation. Ces dernières permettent de définir des plages dans un GOP correspondant à des successions d'images d'une même classe, une classe d'images étant elle-même définie à partir d'un écart entre le taux d'utilisation passé et futur d'une image, comme indiqué plus loin. Ces plages permettent alors de définir les types de codage des images du GOP.

Les cartes $UF_N$ et $UP_N$ calculées sont exploitées pour structurer les GOPs.

Dans notre exemple, la fréquence des images intra est supposée fixe et prédéterminée et le groupe d'images traité est constitué des images situées entre deux images intra successives.

Les cartes $UF_N$ et $UP_N$ servent à déterminer le sens de codage à utiliser pour les images situées entre deux images intra. Soient $\overline{UP_N}$ la valeur moyenne de $UP_N$ sur l'image, c'est à dire la moyenne des coefficients d'utilisation affectés aux pixels ou blocs de l'image, et $\overline{UF_N}$ la valeur moyenne de $UF_N$ sur l'image. On se place sur une image intra, les images qui la précédent ont déjà été codées. Le processus consiste à analyser les valeurs de $\overline{UP_N}$ et $\overline{UF_N}$ entre cette image intra et la prochaine image intra.

Les images situées entre ces deux images intra sont classées selon trois types :

- images de type 1 : celles pour lesquelles $\overline{UF_N}$ est sensiblement supérieure à $\overline{UP_N}$,
- images de type 2 : celles pour lesquelles $\overline{UP_N}$ est sensiblement supérieure à $\overline{UF_N}$
- images de type 3 : celles pour lesquelles $\overline{UP_N}$ et $\overline{UF_N}$ sont du même ordre.

Des plages d'images sont ensuite déterminées parmi trois types:

- plages de type 1: les plages contenant un nombre minimum prédéfini d'images successives de type 1.

Elles correspondent à des plages où le codage doit se faire avec de la prédiction temporelle normale, c'est à dire en pointant vers le passé.

- plages de type 2 : les plages contenant un nombre minimum prédéfini d'images successives de type 2.

Elles correspondent à des plages où le codage doit se faire avec de la prédiction temporelle inverse, c'est à dire en pointant vers le futur.

- plages de type 3 : les plages contenant uniquement des images de type 3 ou présentant des variations du type d'image ne permettant pas d'affecter ces images à une plage du premier ou deuxième type.

Elles sont codées avec de la prédiction temporelle normale.

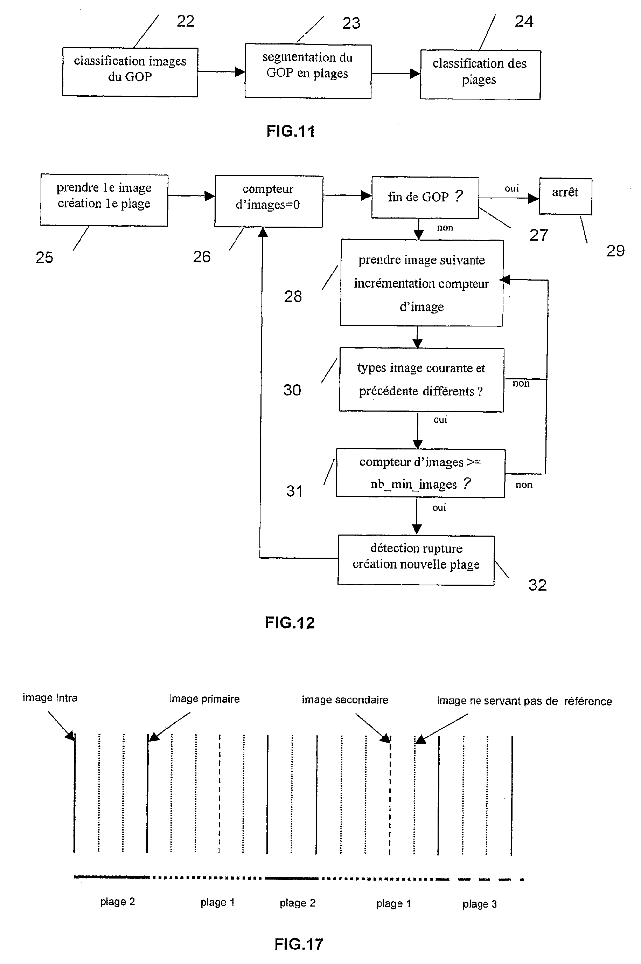

L'enchaînement des différentes opérations permettant la détermination des plages d'un GOP est représenté à la figure 11.

Une première étape référencée 22 effectue une classification des images du GOP.

Le but de cette opération est donc de déterminer le type des images du GOP. Elle consiste tout simplement à effectuer les tests suivants :

$$
\begin{aligned}
&\text{si} && \overline{UFN} > \overline{UP_N} + \lambda && \text{type image} = 1 \\
&\text{sinon si} && \overline{UP_N} > \overline{UT_N} + \lambda && \text{type image} = 2 \\
&\text{sinon} && \text{type image} = 3
\end{aligned}
$$

La valeur de $\lambda$ peut être choisie de manière empirique, un exemple est une valeur voisine de 0,1.

Une deuxième étape 23 réalise une segmentation du GOP en plages d'images, comme indiqué plus haut. Le but de cette opération est de découper les GOP en plages en fonction du type des images qui le constituent.

Après segmentation du GOP en plages, une troisième étape 24 effectue la classification des plages du GOP. La classification des plages est une opération très simple. Si la plage est constituée d'images du même type, le type de la plage est celui des images. Sinon, la plage est classée en type 3.

La figure 12 représente l'organigramme d'un algorithme de segmentation du GOP en plages mis en oeuvre lors de l'étape 23.

Une première étape 25 initie l'algorithme en créant une première plage comprenant la première image sélectionnée du GOP. L'étape suivante 26 initialise un compteur d'images. L'étape suivante 27 teste si l'image traitée correspond à la fin du GOP. Dans la négative, l'étape suivante est l'étape 28 qui prend en compte l'image suivante qui devient l'image courante et incrémente le compteur d'images.

Si le type de l'image courante est différent de celui de l'image précédente, test effectué lors de l'étape 30, un deuxième test est réalisé à l'étape suivante 31 sur la valeur du compteur d'images. Si cette valeur est supérieure ou égale à un seuil appelé nb_min_images, alors l'étape suivante est l'étape 32 qui détecte la rupture de plage et mémorise les images de la plage courante. L'étape suivante est l'étape 26 qui initialise le compteur d'images.

Si, à l'étape 30, le type d'image courante est le même que le type de l'image précédente, l'étape 30 est rebouclée sur l'étape 28.

Si, à l'étape 31, le compteur d'images est inférieur au seuil, alors l'étape 31 est rebouclée sur l'étape 28.

Lorsque la fin du GOP est détectée à l'étape 27, le traitement du GOP est terminé, étape 29.

L'approche proposée consiste donc à détecter des ruptures du type des images. Elle se base sur un seuil nb_min_images correspondant à la taille minimale autorisée pour une plage. Avec des vidéos à 25 images/s, une valeur de 12, pour ce seuil, qui correspond à une demi-seconde, semble raisonnable. Ce nombre doit bien-sûr être inférieur ou égal à la taille du GOP. Si la dernière plage créée est de taille inférieure à nb_min_images, on l'intègre à la plage précédente.

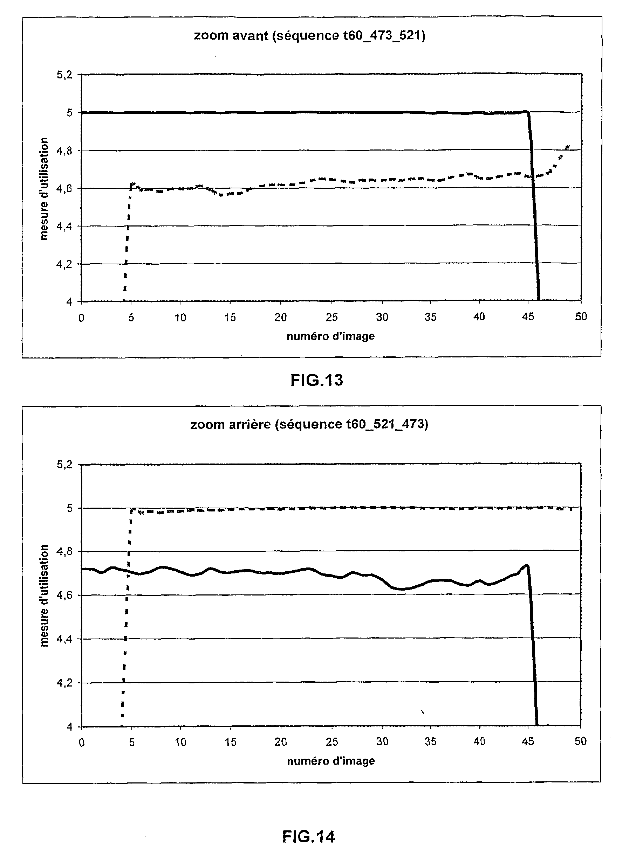

Les figures 13, 14 et 15 donnent des exemples d'évolution de $\overline{UP_N}$, courbe en traits pointillés, et $\overline{UF_N}$, courbes en traits pleins, dans les cas de zoom avant, de zoom arrière et d'une séquence « stephan ».

La figure 13 donne la courbe de $\overline{UP_N}$ et $\overline{UF_N}$ dans le cas d'un zoom avant. La classification donne ici une plage unique de type 1 ($\overline{UF_N} \gg \overline{UP_N}$). Le codage se fait dans le sens normal.

La figure 14 donne la courbe de $\overline{UP_N}$ et $\overline{UF_N}$ dans le cas d'un zoom arrière. La classification donne ici une plage unique de type 2 ($\overline{UP_N} \gg \overline{UF_N}$). Le codage se fait dans le sens inverse.

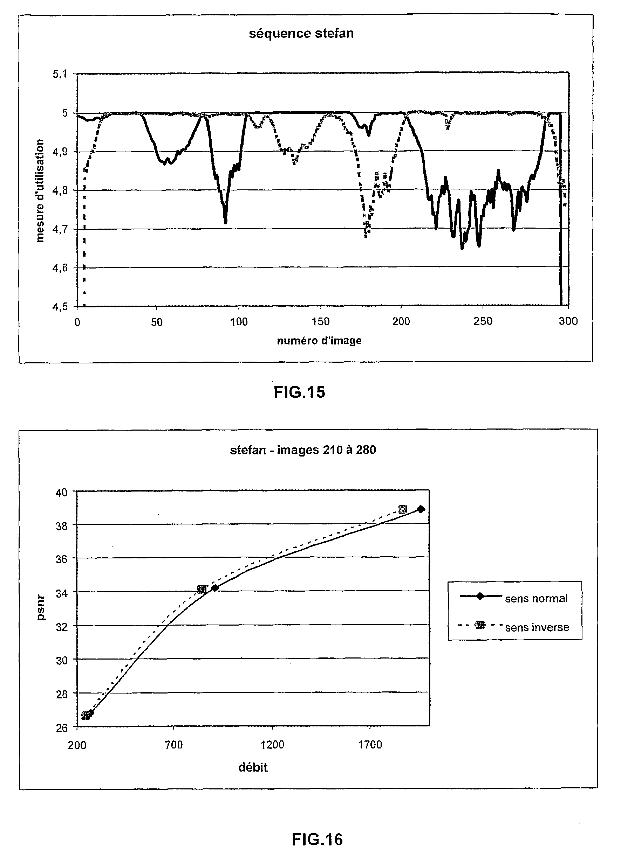

La figure 15 donne la courbe de $\overline{UP_N}$ et $\overline{UF_N}$ sur une séquence de mouvement complexe comprenant, alternativement ou de façon simultanée, des zooms avant, arrière et des mouvements de balayage. On voit assez nettement, sur les courbes, les différentes portions correspondant à la classification proposée. A titre d'exemple, la portion des images 210 à 280 peut être classifiée en plage 2.

Pour ces différents exemples, les champs de mouvement ont été calculés par un estimateur de mouvement de type pel-récursif.

La figure 16 présente les courbes débit-distorsion en codant, avec le codeur de référence MPEG-4 partie 10 (version JM2.0), cette portion d'images en sens normal et en sens inverse, c'est à dire en prédiction anticipée à partir de trames de référence passées et en prédiction différée à partir de trames de référence futures. L'axe des ordonnées représente le rapport signal à bruit (psnr) et l'axe des abscisses le débit. La courbe du bas correspond à l'extrait de la séquence « stephan » codé dans le sens temporel normal, la courbe décalée vers le haut à un codage dans le sens inverse. Il s'avère effectivement que le codage en sens inverse est ici préférable.

Toutes les images ne sont pas nécessairement des images de référence. Dans tous les cas, il semble pertinent de placer des images de référence, qu'on peut qualifier de primaire, aux extrémités de plages préalablement identifiées. Des images de référence supplémentaires, qu'on peut qualifier de secondaire, peuvent ensuite être insérées entre les images primaires, par exemple en fonction d'une fréquence par défaut des images P. Reste à insérer des images qui ne serviront pas de référence, et qui seront prédites selon la plage dans laquelle elles se trouvent dans le sens normal, plage 1, dans le sens inverse, plage 2, ou de façon bi-directionnelle, plage 3. La figure 17 donne un exemple de répartition des images de référence selon ce principe.

Bien sûr l'invention ne se limite pas aux exemples donnés. Il est tout aussi envisageable, lors de la sélection d'images de référence, d'exploiter des champs de vecteurs mouvement entre des images espacées d'un nombre prédéterminé d'images. De même, le procédé itératif peut être effectué entre des images successives ou bien entre des images espacées d'un nombre prédéterminé d'images.

Le taux d'utilisation d'un pixel peut être calculé en fonction de la répartition spatiale des extrémités des vecteurs mouvement pointant dans une zone de caractéristique géométrique prédéterminée autour de ce pixel. La répartition spatiale peut être définie en fonction de la densité de ces extrémités de vecteurs mouvement et/ou de la proximité du pixel traité.

L'estimation de mouvement peut être une estimation de mouvement hiérarchique par bloc d'image permettant ainsi de limiter le calcul à une résolution moyenne donnant une bonne estimation du champ de vecteurs mouvement. Les informations de mouvement pour ce niveau hiérarchique correspondant à la résolution déclarée comme suffisante peuvent alors être exploitées par l'estimateur de mouvement par blocs exploité pour le codage de l'image.

Les deux applications ont été décrites indépendantes l'une de l'autre. Une variante de l'invention consiste à combiner ces deux applications. Une première phase consiste à définir les GOPs et les types d'images constituant les GOPs en fonction des cartes d'utilisation et la deuxième phase consiste à coder les images en fonction des cartes d'utilisation calculées.

## Revendications

1. Procédé de codage d'une séquence d'images, une image comprenant des entités d'image, comportant une étape de :

   - calcul (2, 4, 5) d'un champ de vecteurs mouvement différé (backward) d'une image k-s et/ou anticipé (forward) d'une image k+p, correspondant à une estimation de mouvement d'entités respectivement de l'image k-s vers une image suivante k et/ou de l'image k+p vers une image précédente k, s et p étant des nombres entiers naturels non nuls,

   **caractérisé en ce qu'**il comporte également les étapes de

   - calcul d'un taux d'utilisation (3, 8) d'une entité de l'image k pour un codage prédictif différé de l'image k-s, en fonction du nombre de vecteurs du champ de vecteurs mouvement différé de l'image k-s pointant sur l'entité de l'image k ou dans son proche voisinage et/ou
   - calcul d'un taux d'utilisation (3, 8) d'une entité de l'image k pour un codage prédictif anticipé de l'image k+p, en fonction du nombre de vecteurs du champ de vecteurs mouvement anticipé de l'image k+p pointant sur l'entité de l'image k ou dans son proche voisinage,
   - calcul d'un taux d'utilisation d'image pour l'image k de la séquence en fonction des taux d'utilisation attribués à des entités de la dite image, calculés pour un codage prédictif différé et/ou pour un codage prédictif anticipé
   - sélectionner une image de référence dans la séquence d'images vidéo pour un codage prédictif anticipé d'une image précédente ou un codage prédictif différé d'une image suivante à partir de cette image de référence, en fonction des taux d'utilisation d'image calculés pour les images de la séquence.

2. Procédé selon la revendication 1, **caractérisé en ce que** le taux d'utilisation est également fonction de la répartition spatiale des extrémités des vecteurs mouvement dans l'image k (13, 14, 15), soit du champ de vecteurs mouvement différé d'une image k-s, soit du champ de vecteurs mouvement anticipé d'une image k+p.

3. Procédé selon la revendication 2, **caractérisé en ce que** le taux d'utilisation calculé pour une entité (i, j) de l'image k est effectué selon les étapes suivantes :

   - pour une zone prédéterminée autour de cette entité, détermination des extrémités des vecteurs mouvement du champ de vecteurs de l'image k-s ou k+p,
   - calcul d'un taux d'utilisation pour cette entité (i, j) en fonction du nombre d'extrémités dans la zone et, pour chaque extrémité, de la distance de cette extrémité à l'entité (i, j) (13, 14, 15).

4. Procédé selon la revendication 1, **caractérisé en ce qu'**il met en oeuvre le procédé itératif suivant (8, 9, 10) sur un groupe de P images précédant l'image k pour le calcul d'un taux d'utilisation pour un codage prédictif différé ou suivant l'image k pour le calcul d'un taux d'utilisation pour un codage prédictif anticipé, P étant un entier naturel non nul, les champs de vecteurs mouvement étant calculés pour ces images,

- calcul du taux d'utilisation d'une entité (i, j) d'une image du groupe en fonction du taux d'utilisation de l'entité de l'image précédente, respectivement suivante, origine du vecteur mouvement dont l'extrémité est affectée à l'entité (i, j) de la dite image du groupe.

**5.** Procédé selon la revendication 4, **caractérisé en ce que** le taux d'utilisation d'une entité d'une image précédente, respectivement suivante, est pondéré temporellement pour donner moins d'importance aux images les plus éloignées de l'image calculée k.

**6.** Procédé selon la revendication 1, **caractérisé en ce que** le mode de codage (18) d'une entité de l'image tel que mode inter, mode intra, est sélectionné en fonction de son taux d'utilisation (3).

**7.** Procédé selon la revendication 1, **caractérisé en ce qu'**un paramètre de codage (18) d'une entité de l'image tel que pas de quantification, taille d'un bloc d'image, critère débit-distorsion, nombre de coefficients AC codés, matrice de pondération, est calculé en fonction de son taux d'utilisation (3).

**8.** Procédé selon la revendication 1, une entité d'image étant un bloc d'image, **caractérisé en ce que** l'estimation de mouvement d'entités (2) est réalisé en une étape d'échantillonnage de l'image (1) de manière à ce qu'un pixel de l'image échantillonnée corresponde à une entité d'image, puis en une estimation de mouvement (2) au niveau du pixel, sur l'image échantillonnée.

**9.** Procédé selon la revendication 1, **caractérisé en ce qu'**une entité d'image est un pixel et **en ce que** le codage de l'image est fonction de la valeur moyenne des taux affectés aux pixels de l'image.

**10.** Procédé de structuration d'un GOP mettant en oeuvre le procédé selon la revendication 1 pour le calcul de taux d'utilisation des images de la séquence, **caractérisé en ce qu'**il comporte les étapes suivantes :

- définition de 3 classes d'images selon que le taux d'utilisation future est sensiblement supérieur, du même ordre ou sensiblement inférieur au taux d'utilisation passée,
- classification des images du GOP (22),
- détermination de plages d'images constituées d'un nombre minimum prédéfini d'images successives de même classe (23),
- classification des plages en fonction de ces classes d'images (24),
- structuration du GOP en imposant des images de référence de type P aux extrémités des plages déterminées.

**11.** Procédé selon la revendication 10, **caractérisé en ce que** des images de référence supplémentaires de type P sont placées à l'intérieur des plages encadrées par des images de référence de type P lorsque ces plages ont une longueur supérieure à une valeur prédéfinie.

**12.** Procédé selon la revendication 10, **caractérisé en ce que** le mode de codage des images est fonction de la plage à laquelle elles appartiennent.

**Patentansprüche**

**1.** Verfahren zur Codierung einer Bildsequenz, wobei ein Bild Bildeinheiten umfasst, bestehend aus einem Schritt zur:

- Berechnung (2, 4, 5) eines Bewegungsvektorfeldes rückwärts (backward) eines Bildes k-s und/oder vorwärts (forward) eines Bildes k+p, die einer Bewegungsschätzung von Einheiten jeweils des Bildes k-s in Richtung eines nachfolgenden Bildes k und/oder des Bildes k+p in Richtung eines vorhergehenden Bildes k entspricht, wobei s und p ganze natürliche Zahlen ungleich null sind, **dadurch gekennzeichnet, dass** es ebenfalls aus den folgenden Schritten besteht:
- Berechnung einer Verwendungsrate (3, 8) einer Einheit des Bildes k für eine prädiktive Rückwärtscodierung des Bildes k-s, in Abhängigkeit von der Anzahl an Vektoren des Rückwärtsbewegungsvektorfeldes des Bildes k-s, gerichtet auf die Einheit des Bildes k oder in seine nahe Umgebung, und/oder

- Berechnung einer Verwendungsrate (3, 8) einer Einheit des Bildes k für eine prädiktive Vorwärtscodierung des Bildes k+p, in Abhängigkeit von der Anzahl an Vektoren des Vorwärtsbewegungsvektorfeldes des Bildes k+p, gerichtet auf die Einheit des Bildes k oder in seine nahe Umgebung,

- Berechnung einer Bildverwendungsrate für das Bild k der Sequenz in Abhängigkeit von den Verwendungsraten, die Einheiten des besagten Bildes zugeordnet wurden, berechnet für eine prädiktive Rückwärtscodierung und/oder für eine prädiktive Vorwärtscodierung,

- Auswahl eines Referenzbildes in der Videobildsequenz für eine prädiktive Vorwärtscodierung eines vorangegangenen Bildes oder eine prädiktive Rückwärtscodierung eines nachfolgenden Bildes ausgehend von diesem Referenzbild, in Abhängigkeit von den für die Bilder der Sequenz berechneten Bildverwendungsraten.

2. Verfahren nach Anspruch 1, **dadurch gekennzeichnet, dass** die Verwendungsrate ebenfalls von der räumlichen Verteilung der Endpunkte der Bewegungsvektoren im Bild k (13, 14, 15) abhängt, entweder vom Rückwärtsbewegungsvektorfeld eines Bildes k-s, oder vom Vorwärtsbewegungsvektorfeld eines Bildes k+p.

3. Verfahren nach Anspruch 2, **dadurch gekennzeichnet, dass** die für eine Einheit (i, j) des Bildes k berechnete Verwendungsrate gemäß den folgenden Schritten ausgeführt wird:

   - für eine vorher festgelegte Zone rund um diese Einheit, Bestimmung der Endpunkte der Bewegungsvektoren des Vektorfeldes des Bildes k-s oder k+p,
   - Berechnung einer Verwendungsrate für diese Einheit (i, j) in Abhängigkeit von der Anzahl von Endpunkten in der Zone und, für jeden Endpunkt, von der Entfernung dieses Endpunktes zur Einheit (i, j) (13, 14, 15).

4. Verfahren nach Anspruch 1, **dadurch gekennzeichnet, dass** es das folgende iterative Verfahren (8, 9, 10) auf eine Gruppe von P Bildern anwendet, die dem Bild k vorangeht, für die Berechnung einer Verwendungsrate für eine prädiktive Rückwärtscodierung, oder die dem Bild k nachfolgt, für die Berechnung einer Verwendungsrate für eine prädiktive Vorwärtscodierung, wobei P ein natürliches Ganzes ungleich null ist, und die Bewegungsvektorfelder für diese Bilder berechnet werden,

   - Berechnung der Verwendungsrate einer Einheit (i, j) eines Bildes der Gruppe in Abhängigkeit von der Verwendungsrate der Einheit des vorangegangenen beziehungsweise des nachfolgenden Bildes, Beginn des Bewegungsvektors, dessen Endpunkt der Einheit (i, j) des besagten Bildes der Gruppe zugeordnet ist.

5. Verfahren nach Anspruch 4, **dadurch gekennzeichnet, dass** die Verwendungsrate einer Einheit eines vorangegangenen beziehungsweise nachfolgenden Bildes vorübergehend gewichtet wird, um den am weitesten entfernten Bildern des berechneten Bildes k weniger Bedeutung zu geben.

6. Verfahren nach Anspruch 1, **dadurch gekennzeichnet, dass** der Codierungsmodus (18) einer Einheit des Bildes wie Intermodus, Intramodus in Abhängigkeit von seiner Verwendungsrate (3) ausgewählt wird.

7. Verfahren nach Anspruch 1, **dadurch gekennzeichnet, dass** ein Codierungsparameter (18) einer Einheit eines Bildes wie Quantisierungsschritt, Größe eines Bildblocks, Rate-Distorsion-Kriterium, Anzahl an kodierten AC-Koeffizienten, Gewichtungsmatrix, in Abhängigkeit von seiner Verwendungsrate (3) berechnet wird.

8. Verfahren nach Anspruch 1, wobei eine Bildeinheit ein Bildblock ist, **dadurch gekennzeichnet, dass** die Bewegungsschätzung von Einheiten (2) in Form eines Abtastschrittes des Bildes (1) vorgenommen wird, dergestalt, dass ein Pixel des abgetasteten Bildes einer Bildeinheit entspricht, und danach in Form einer Bewegungsschätzung (2) bezogen auf den Pixel auf dem abgetasteten Bild.

9. Verfahren nach Anspruch 1, **dadurch gekennzeichnet, dass** eine Bildeinheit ein Pixel ist und dass die Codierung des Bildes vom Mittelwert der den Pixeln des Bildes zugeordneten Raten abhängt.

10. Verfahren zur Strukturierung einer Bildstrukturgruppe, bei dem das Verfahren nach Anspruch 1 für die Berechnung von Verwendungsraten der Bilder der Sequenz umgesetzt wird, **dadurch gekennzeichnet, dass** es die folgenden Schritte umfasst:

    - Bestimmung von 3 Bildklassen je nachdem, ob die künftige Verwendungsrate deutlich höher, von der gleichen Größenordnung oder deutlich geringer als die vergangene Verwendungsrate ist,
    - Klassifizierung der Bilder der Bildstrukturgruppe(22),

- Bestimmung von Bilderbereichen bestehend aus einer vorher festgelegten Mindestanzahl von aufeinanderfolgenden Bildern der gleichen Klasse (23),
- Klassifizierung der Bereiche in Abhängigkeit von diesen Bildklassen (24),
- Strukturierung der Bildstrukturgruppe durch Festlegung von Referenzbildern vom Typ P an den Endpunkten der bestimmten Bereiche.

**11.** Verfahren nach Anspruch 10, **dadurch gekennzeichnet, dass** zusätzliche Referenzbilder vom Typ P im Innern der durch Referenzbilder vom Typ P eingerahmten Bereiche platziert werden, wenn diese Bereiche eine Länge haben, die höher als ein vorher festgelegter Wert ist.

**12.** Verfahren nach Anspruch 10, **dadurch gekennzeichnet, dass** der Codierungsmodus der Bilder von dem Bereich, zu dem sie gehören, abhängig ist.

## Claims

**1.** Method for coding a sequence of pictures, a picture comprising picture entities, comprising a step for the:

- calculation (2, 4, 5) of a backward motion vector field of a picture k-s and/or forward motion vector field of a picture k+p, corresponding to a motion estimation of entities respectively of the picture k-s to a following picture k and/or of the picture k+p to a preceding picture k, s and p being non-null natural integers,

**characterised in that** it also comprises steps for the:

- calculation of a rate of use (3, 8) of an entity of the picture k for a backward predictive coding of the picture k-s, according to the number of vectors of the backward motion vector field of the picture k-s pointing to the entity of the picture k or in its near surroundings and/or
- calculation of a rate of use (3, 8) of an entity of the picture k for a forward predictive coding of the picture k+p, according to the number of vectors of the forward motion vector field of the picture k+p pointing to the entity of the picture k or in its near surroundings,
- calculation of a rate of picture use for the picture k of the sequence according to the rates of use assigned to the entities of the said picture, calculated for a backward predictive coding and/or for a forward predictive coding,
- selection of a reference picture in the sequence of video pictures for a forward predictive coding of a preceding picture or a backward predictive coding of a following picture from this reference picture, according to the rates of picture use calculated for the pictures of the sequence.

**2.** Method according to claim 1, **characterised in that** the rate of use is also dependent upon the spatial distribution of the extremities of the motion vectors in the picture k (13, 14, 15), either of the backward motion vector field of a picture k-s, or of the forward motion vector field of a picture k+p.

**3.** Method according to claim 2, **characterised in that** the rate of use calculated for an entity (i, j) of the picture k is obtained according to the following steps:

- for a predetermined zone around this entity, determination of the extremities of the motion vectors of the vector field of the picture k-s or k+p,
- calculation of a rate of use for this entity (i, j) in accordance with the number of extremities in the zone and, for each extremity, of the distance from this extremity to the entity (i, j) (13, 14, 15).

**4.** Method according to claim 1, **characterised in that** it implements the following iterative method (8, 9, 10) on a group of P pictures preceding the picture k for the calculation of a rate of use for a backward predictive coding or following the picture k for the calculation of rate of use for a forward predictive coding, P being a non-null natural integer, the motion vector fields being calculated for these pictures,

- calculation of the rate of use of an entity (i, j) of a picture of the group according to the rate of use of the entity of the preceding, respectively following, picture, origin of the motion vector whose extremity is assigned to the entity (i, j) of the said picture of the group.

**5.** Method according to claim 4, **characterised in that** the rate of use of an entity of a preceding, respectively following, picture, is temporally weighted to give less importance to the pictures furthest from the calculated picture k.

6. Method according to claim 1, **characterised in that** the coding mode (18) of an entity of the picture such as the inter mode or intra mode is selected according to its rate of use (3).

7. Method according to claim 1, **characterised in that** a coding parameter (18) of an entity of the picture such as quantizing step, picture block size, bit-rate-distortion criteria, number of AC coefficients coded or weighting matrix is calculated according to its rate of use (3).

8. Method according to claim 1, a picture entity being a picture block, **characterised in that** the entity motion estimation (2) is realised by a picture sampling step (1) in such a manner that a pixel of the sampled picture corresponds to a picture entity, then by a motion estimation (2) at the level of the pixel, on the picture sampled.

9. Method according to claim 1, **characterised in that** a picture entity is a pixel and **in that** the picture coding depends on the average value of the rates assigned to the pixels of the picture.

10. Method for organising a GOP implementing the method according to claim 1 for calculating the rate of use of the pictures of the sequence, **characterised in that** it comprises the following steps:

   - definition of 3 picture classes depending on whether the rate of future use is noticeably greater than, in the same order as or noticeably less than the rate of past use,
   - classification of the pictures of the GOP (22),
   - determination of ranges of pictures constituted by a predefined minimum number of successive pictures of the same class (23),
   - classification of the ranges according to these picture classes (24),
   - organisation of the GOP by imposing reference pictures of type P at the extremities of the determined ranges.

11. Method according to claim 10, **characterised in that** additional reference pictures of type P are placed within the ranges surrounded by reference pictures of type P when these ranges have a length greater than a predefined value.

12. Method according to claim 10, **characterised in that** the coding mode of the pictures depends on the range to which they belong.

```
                    ┌─────────────┐      ┌─────────────┐      ┌─────────────┐
images              │  réduction  │      │  estimation │      │ calcul cartes│
                ───→│  résolution │ ───→ │mouvements fwd et│─→│d'utilisation passée│ ───→
source              │  spatiale   │      │     bwd     │      │   et future │
                    └─────────────┘      └─────────────┘      └─────────────┘
                            1                    2                    3
```

**FIG.1**

```
                              ┌─────────→ 4
                              │   MB_k
   image k-1      image k            image k+1
              5
        ←─────────
          MF_k
```

**FIG.2**

```
 MB_{N-4}   MB_{N-3}   MB_{N-2}   MB_{N-1}

                                         MF_{N+1}  MF_{N+2}  MF_{N+3}  MF_{N+4}

image     image    image    image    image   image    image    image    image
N-4       N-3      N-2      N-1      N       N+1      N+2      N+3      N+4

              UP                              UF
```

**FIG.3**

initialisation de
la carte $UT_{N+P}$ à 0    — 6

$k = P-1$    — 7

Calcul de $UT_{N+k}$ à partir de $UT_{N+k+1}$ et de $MF_{N+k+1}$    — 8

$k = k-1$    — 9

$k < 0$ ?    — 10

non

oui

copie de $UT_N$ dans $UF_N$    — 11

**FIG.4**

— 12
Initialisation
de U à 0

pour chaque
pixel (i,j)
de l'image $U_{prec}$
calcul position
du pixel déplacé
(di,dj)    — 13

calcul position entière
du pixel déplacé
(Di,Dj)    — 14

mise à jour des valeurs
$U(Di,Dj)$, $U(Di+1,Dj)$, $U(Di,Dj+1)$, $U(Di+1,Dj+1)$
par répartition bilinéaire de $U_{prec}$ (i,j)    — 15

**FIG.5**

**FIG.6**

**FIG.7**

**FIG.8**

19

/ 1

/ 2

/ 3

images
source

réduction
résolution
spatiale

estimation
mouvements fwd et
bwd

calcul cartes
d'utilisation passée
et future

Retard de P
images

16

/ 19

Estimation
mouvement
par bloc

Choix
paramètres
de codage

Codage
image

17

18

**FIG.9**

images
source

réduction
résolution
spatiale

estimation
mouvements fwd et
bwd

2

1

calcul cartes d'utilisation
passée et future

3

21

choix images de
référence

choix type des images

20

**FIG.10**

22

23

24

| classification images du GOP | → | segmentation du GOP en plages | → | classification des plages |

**FIG.11**

| prendre 1e image création 1e plage | → | compteur d'images=0 | → | fin de GOP ? | —oui→ | arrêt |

25

26

non

28

prendre image suivante incrémentation compteur d'image

27

29

30

types image courante et précédente différents ?

non

oui

31

compteur d'images >= nb_min_images ?

non

oui

détection rupture création nouvelle plage

32

**FIG.12**

image Intra                image primaire              image secondaire            image ne servant pas de référence

plage 2        plage 1        plage 2        plage 1        plage 3

**FIG.17**

## zoom avant (séquence t60_473_521)

**FIG.13**

## zoom arrière (séquence t60_521_473)

**FIG.14**

séquence stefan

FIG.15

stefan - images 210 à 280

FIG.16